(19) Europäisches Patentamt

European Patent Office

Office européen des brevets

(11) **EP 3 109 011 B1**

(12) **FASCICULE DE BREVET EUROPEEN**

(45) Date de publication et mention
de la délivrance du brevet:
**04.10.2017 Bulletin 2017/40**

(51) Int Cl.:
***B25J 9/10*** *(2006.01)*     ***B25J 13/02*** *(2006.01)*
***F16H 9/00*** *(2006.01)*

(21) Numéro de dépôt: **16175635.8**

(22) Date de dépôt: **22.06.2016**

(54) **BRAS ARTICULÉ MOTORISÉ À CABESTAN À CÂBLE SÉCURISÉ**

MOTORISIERTER GELENKARM MIT SICHERE CAPSTAN MIT KABEL

MOTORISED ARTICULATED ARM HAVING A SECURE CABLE CAPSTAN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.06.2015 FR 1556002**

(43) Date de publication de la demande:
**28.12.2016 Bulletin 2016/52**

(73) Titulaire: **Haption
53210 Soulgé-sur-Ouette (FR)**

(72) Inventeur: **LOUVEAU, François
53170 Villiers Charlemagne (FR)**

(74) Mandataire: **Vidon Brevets & Stratégie
16B, rue de Jouanet
B.P. 90333
Technopole Atalante
35703 Rennes Cedex 7 (FR)**

(56) Documents cités:
**FR-A1- 2 952 573    US-A- 5 828 197
US-A- 5 898 599    US-A1- 2011 003 656**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### 1. Domaine de l'invention

Le domaine de l'invention est celui des interfaces haptiques, des systèmes à retour d'effort, des bras maîtres pour la téléopération et des robots de comanipulation. Le domaine connexe est celui des automates dévolus à la manipulation d'objets dans l'espace.

Plus précisément, l'invention concerne un organe de commande homme-machine permettant de contraindre ou d'accompagner le mouvement d'un opérateur notamment dans le but de stimuler son système sensoriel sur le plan kinesthésique.

L'invention a de nombreuses applications haptiques, telles que par exemple la téléopération, l'activité de soutien à la rééducation, la comanipulation humain / robot lors d'interventions médicales ou industrielles, l'interconnexion d'un être humain avec un environnement de réalité virtuelle.

### 2. Art antérieur

Les robots travaillant en collaboration avec l'humain sont de plus en plus utilisés dans de multiples domaines d'application.

De tels robots pourront par exemple être utilisés dans le domaine de la chirurgie laparoscopique qui consiste notamment à pratiquer des trous de faible diamètre dans le corps d'un patient pour y glisser des outils chirurgicaux en vu de réaliser une opération chirurgicale.

Dans ce cas, comme dans celui d'autres applications, le robot comprend par exemple un bras articulé mobile en rotation par rapport à un bâti, le cas échéant selon plusieurs axes, et des moteurs susceptibles de transmettre des couples au bras autour de ces axes.

Le bras est destiné à porter un instrument chirurgical qui sera déplacé par un chirurgien au cours d'une opération. Afin de stimuler les récepteurs haptiques du chirurgien au cours de l'opération de telle manière qu'il perçoive le milieu avec lequel il interagit pendant l'opération, le robot est préalablement programmé afin que le ou les moteurs transmettent au bras des couples moteurs ou résistants correspondants aux différentes zones (tissus, organes, nerfs...) du milieu dans lequel agit le chirurgien. Les moteurs permettent ainsi d'accompagner ou de contraindre les mouvements du bras articulé et par conséquent ceux du chirurgien manipulant le bras. Le chirurgien reçoit ainsi des retours d'efforts au cours de l'opération.

Pour remplir son rôle, le robot doit non seulement transmettre des couples au bras articulé via les moteurs mais également contrôler les efforts qui lui sont appliqués par son environnement, par exemple un opérateur comme un chirurgien, de façon à adapter les couples que ses moteurs transmettent. Le robot est donc contrôlé en effort.

On connaît ainsi, dans l'état de la technique, différentes façons de contrôler un robot en effort. Au rang de ces techniques figure celle qui consiste à utiliser un robot mécaniquement réversible mettant en oeuvre des articulations motorisées. Ces robots permettent d'obtenir au niveau des moteurs une bonne estimation des efforts qui sont appliqués à l'extrémité du robot. Le robot est en effet conçu de telle façon que ses articulations ne frottent pas. Ainsi les efforts appliqués sur l'extrémité du robot sont transmis au travers des chaînes de transmission jusqu'aux moteurs. Comme le courant circulant dans les moteurs est proportionnel au couple qu'ils génèrent, il est possible d'estimer par la mesure des courants circulant dans les moteurs, les efforts appliqués sur le robot et de contrôler en conséquence le robot.

Pour assurer un bon niveau de fiabilité dans l'évaluation des efforts, le frottement dans les articulations du robot doit être très faible. Dans ce but, il est connu de mettre en oeuvre des articulations à entrainement direct. Toutefois, pour que l'articulation génère des couples suffisants, les moteurs doivent être dimensionnés en conséquence. Ils sont alors de taille importante ce qui nuit à la compacité du robot.

Pour utiliser des moteurs de plus petites dimensions afin d'améliorer la compacité du robot, les couples délivrés par les moteurs doivent être amplifiés (et leur fréquence de rotation doit être réduite) par un réducteur placé en sortie des moteurs. Pour ce faire, il est connu de mettre en oeuvre des réducteurs à câble.

Les réducteurs à câble, outre le fait qu'ils assurent de manière efficace leur fonction primaire de réducteur, présentent l'avantage de ne pas induire de frottement, comme ceci serait par exemple le cas d'un réducteur à engrenages ou d'un réducteur à courroie. En effet, un réducteur à engrenages introduirait un frottement entre les dents des engrenages. D'autre part, une légère précontrainte entre les axes d'entrée et de sortie est généralement utilisée pour minimiser le jeu de transmission. Cette précontrainte rajoute du frottement sur les roulements et entre les dents en contact. Un réducteur à courroie introduirait également un frottement important. Pour que la courroie travaille correctement, elle doit être tendue. Cette tension ajoute du frottement dans les roulements des axes d'entrée et de sortie. D'autre part, la courroie frotte lors de son arrivée et son départ des poulies.

Le document US 5 046 375 décrit un exemple de réducteur à câble du type comprenant une poulie placée en sortie d'un moteur, une poulie solidaire de l'articulation et un câble enroulé autour de la poulie solidaire du moteur en passant autour de la poulie solidaire de l'articulation. Une mise en rotation dans un sens ou dans l'autre du moteur entraine en rotation la poulie solidaire de son arbre ainsi que l'articulation via la poulie solidaire de celle-ci et le câble.

Le document US 2011/0003656 A1 décrit un bras articulé selon le préambule de la revendication 1 de la présente demande utilisé dans le domaine chirurgical.

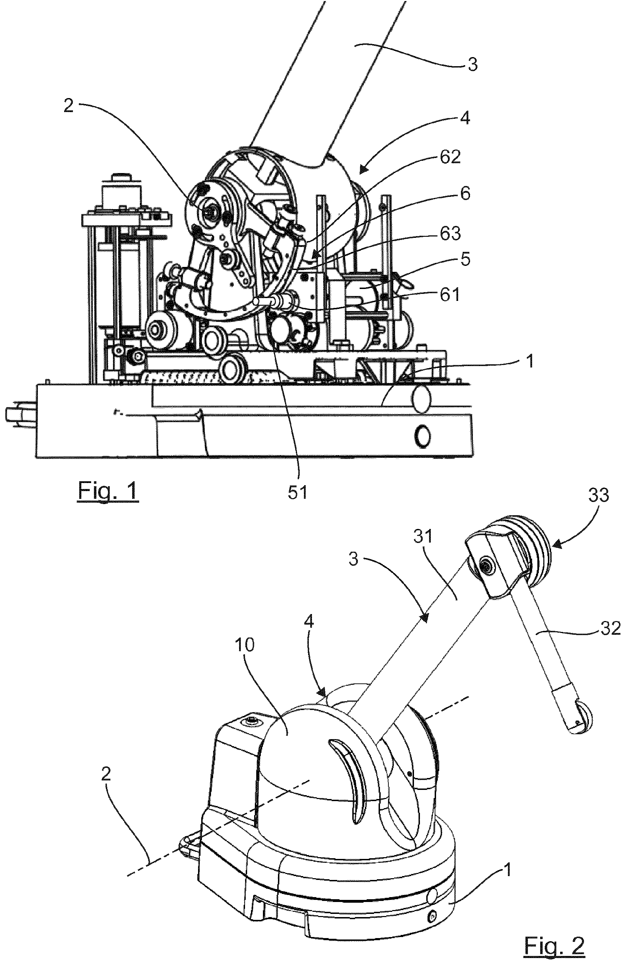

On connaît enfin des réducteurs à câble de type à cabestan tel que celui illustré à la figure 1.

Cette figure illustre partiellement un bras articulé motorisé d'interface haptique. Ce bras articulé comprend un bâti 1 auquel est lié un bras 3 de manière mobile en rotation autour d'un axe 2 au moyen d'une articulation 4. Le bras 3 peut être entrainé en rotation autour de l'axe 2 au moyen d'un moteur 5 et d'un réducteur à câble de type à cabestan 6.

Ce réducteur 6 comprend :

- une poulie 61 de petit diamètre appelée « poulie moteur » liée à l'arbre de sortie 51 d'un moteur 5 ;
- une poulie ou portion de poulie de plus grand diamètre 62 appelée « secteur » qui est solidaire du bras articulé 3, et dont l'axe de rotation est identique à celui du bras ;
- un câble 63, dont les extrémités sont liées au secteur 62, s'étendant le long du secteur 62 en s'enroulant autour de la poulie moteur 61.

Le rapport de réduction est déterminé par le rapport de la somme du rayon de la poulie moteur 61 et du rayon du câble d'une part et de la somme du rayon du secteur 62 et du rayon du câble d'autre part.

La mise en rotation du moteur induit une rotation de la poulie moteur 61. Le secteur 62, alors entrainé en rotation par le câble 63 à une vitesse plus lente, entraine à son tour le bras articulé 3 en rotation autour de l'axe 2 en lui transmettant un couple plus élevé que le couple de sortie du moteur 5.

Les réducteurs à câble, et notamment de type à cabestan, présentent l'avantage d'induire de très faibles frottements. En effet, le câble transmet des efforts tangentiellement aux axes des poulies. Les roulements de guidage des poulies ne sont donc pas chargés par les efforts transmis. La mise en oeuvre de réducteurs de ce type permet donc d'assurer de manière efficace la fonction de réducteur et de procéder de manière fiable à la mesure des efforts transmis au bras sans que la mesure ne soit perturbée par des frottements importants dans le réducteur.

La compacité des robots est un critère de conception important. Par conséquent, leurs concepteurs n'ont de cesse que de l'améliorer afin de réduire l'encombrement des robots.

Pour réaliser de façon fiable la transmission du mouvement de la poulie au secteur, des câbles en acier sont souvent utilisés. Le rayon d'enroulement minimum d'un câble sur une poulie est fourni par le fabricant du câble. Ce rayon d'enroulement minimum du câble va donc dimensionner la taille de la poulie moteur et par conséquent celle du secteur. Les câbles en acier les plus souples acceptent actuellement des rayons d'enroulement égaux à 16 fois leur rayon.

Par conséquent, pour parvenir à améliorer la compacité d'un robot, son concepteur cherchera à réduire le rayon de la poulie moteur et par conséquent celui du câble.

Toutefois, pour un type de câble donné, sa résistance mécanique est proportionnelle à son rayon. En effet, plus le rayon du câble sera important plus sa résistance mécanique sera élevée.

Ainsi, l'amélioration de la compacité du robot et la préservation de la résistance mécanique du réducteur sont antagonistes.

L'amélioration de la compacité visera donc à réduire la dimension du câble en acier sous réserve que sa tenue sous charge soit suffisante.

Le critère de compacité étant très important, on cherchera le plus souvent à réduire au maximum le diamètre du câble. Ceci induit toutefois le risque que, si un effort trop important est exercé sur le bras du robot, le câble se déforme. Dans des situations extrêmes, ceci pourrait conduire à la rupture du câble. Le fonctionnement du robot serait perturbé avec des conséquences plus ou moins dommageables et acceptables selon la nature de la tâche réalisée.

Toutefois, pour des applications sensibles, par exemple des applications médicales, ce type d'inconvénient doit être évité. Pour cela, un facteur de sécurité important en tenue sous charge des câbles est nécessaire. Ce facteur de sécurité impose l'utilisation de câble de diamètre important et donc un fort encombrement du réducteur ce qui nuit à la compacité globale du robot.

Les techniques de l'art antérieur ne permettent donc pas de procurer un robot très compact et bénéficiant d'une grande résistance mécanique. Un besoin en ce sens existe donc.

## 3. Objectifs de l'invention

L'invention a notamment pour objectif d'apporter une solution efficace à au moins certains de ces différents problèmes.

En particulier, selon au moins un mode de réalisation, un objectif de l'invention est de fournir un bras articulé d'interface haptique à réducteur à câble qui soit compact et résistant.

Notamment, l'invention a pour objectif, selon au moins un mode de réalisation, d'améliorer la compacité d'un tel bras articulé, tout en garantissant un fort facteur de sécurité.

Un autre objectif de l'invention est, selon au moins un mode de réalisation, de fournir un tel bras articulé qui soit simple de conception et/ou facile à mettre en oeuvre.

## 4. Présentation de l'invention

Pour ceci, l'invention propose un bras articulé motorisé d'interface haptique comprenant au moins :

- un bâti ;
- un bras lié audit bâti de manière mobile en rotation autour d'au moins un axe, des efforts étant susceptibles d'être appliqués sur ledit bras par son environnement ;

- des moyens moteurs conçus pour délivrer au moins un couple autour dudit axe s'opposant au moins en partie auxdits efforts appliqués audit bras par son environnement ;
- une transmission principale audit bras dudit couple autour dudit axe, ladite transmission principale comprenant un réducteur à câble de type cabestan ;
- une transmission auxiliaire audit bras dudit couple autour dudit axe, ladite transmission auxiliaire pouvant prendre au moins deux états :

  - un état inactif, pris tant que lesdits efforts appliqués sur ledit bras par son environnement contre l'effet dudit couple sont inférieurs à un seuil prédéterminé, dans lequel ladite transmission auxiliaire ne transmet aucun couple audit bras ;
  - un état actif, pris lorsque lesdits efforts appliqués sur ledit bras par son environnement contre l'effet dudit couple sont supérieurs à un seuil prédéterminé, dans lequel ladite transmission principale ne transmet aucun couple audit bras.

Ainsi, l'invention consiste à équiper un bras articulé d'interface haptique d'une transmission principale à réducteur à câble et d'une transmission auxiliaire, la transmission auxiliaire étant mise en oeuvre en substitution de la transmission principale à réducteur à câble lorsque les efforts appliqués sur le bras par son environnement deviennent supérieurs à une certaine valeur.

Il est ainsi possible de dimensionner au plus juste le réducteur à câble pour optimiser la compacité du bras tout en garantissant une très bonne tenue mécanique, en d'autres termes un bon facteur de sécurité, lorsqu'un effort trop élevé pour le réducteur à câble est appliqué au bras.

La mise en oeuvre de l'invention permet ainsi de procurer un bras articulé d'interface haptique robuste et compact pouvant par exemple trouver des applications dans des domaines sensibles tel que notamment le domaine médical.

La transmission principale et la transmission auxiliaire auront préférentiellement des rapports de réductions identiques, ce qui permettra d'avoir un fonctionnement identique du bras en matière de réduction quelle que soit la transmission active.

Selon une caractéristique envisageable, ladite transmission auxiliaire est configurée pour prendre ledit état actif lorsque les efforts appliqués par l'environnement sur ledit bras contre l'effet dudit couple induisent une déformation dudit câble supérieure à un seuil prédéterminé.

Ce seuil sera déterminé de manière telle que la transmission auxiliaire s'active avant que le couple généré sur le bras n'induise une déformation du câble de nature à le dégrader. On garantit ainsi la sécurité et la fiabilité du bras selon l'invention.

Selon une caractéristique envisageable, ladite transmission auxiliaire comprend un réducteur à engrenages.

Cette mise en oeuvre est simple et robuste.

Selon une caractéristique envisageable, ladite transmission principale comprend :

- un élément d'entrainement lié en rotation audit bras, ledit élément d'entrainement comprenant au moins un secteur angulaire dont l'axe est confondu avec l'axe de rotation dudit bras ;
- une poulie d'entrainement liée auxdits moyens moteur;

ledit câble dudit réducteur à câble s'étendant le long dudit secteur angulaire en s'enroulant autour de ladite poulie, les extrémités dudit câble étant fixées audit élément d'entrainement.

Une telle structure correspond à celle d'un réducteur de type cabestan.

Selon une caractéristique envisageable, ladite transmission auxiliaire comprend :

- un pignon lié auxdits moyens moteurs et monté dans l'axe de ladite poulie,
- au moins une portion de roue dentée solidaire dudit élément d'entrainement et engrenant avec ledit pignon ;

le rapport de réduction de ladite transmission auxiliaire étant identique à celui de ladite transmission principale, l'entraxe entre l'axe de rotation dudit pignon et l'axe de rotation de ladite roue dentée étant supérieur à l'entraxe entre l'axe de rotation de ladite poulie et l'axe de rotation dudit élément d'entrainement de telle sorte que ledit pignon et ladite roue sont en contact et engrènent l'un avec l'autre seulement lorsque ladite transmission auxiliaire est dans ledit état actif.

Selon une caractéristique envisageable, la différence entre lesdits entraxes est comprise entre 0,1 et 0,5 fois la hauteur des dents dudit pignon et de ladite roue.

Une différence d'entraxe, c'est-à-dire un jeu entre les diamètres primitifs du pignon et de la roue, comprise à l'intérieur de cet intervalle permet d'obtenir un niveau de sécurité important en garantissant l'enclenchement de la transmission auxiliaire avant que le câble ne se dégrade.

Selon une caractéristique envisageable, la différence dE entre lesdits entraxes est déterminée selon la formule suivante :

$$dE = Cmax / (K. \sin(alpha).F)$$

avec alpha : angle de pression de l'engrenage (pignon, roue)

K : raideur du câble
F : facteur de sécurité
Cmax : charge maximale sur le câble

Selon une caractéristique envisageable, ledit bras est monté mobile en rotation par rapport audit bâti selon une pluralité d'axes, ledit bras articulé comprenant autant d'ensembles de moyens moteur, de transmission principale et de transmission auxiliaire que d'axes autour desquels ledit bras peut tourner, chaque ensemble de moyens moteur, transmission principale et transmission auxiliaire étant dédié à la transmission de couple selon un desdits axes.

Un bras selon l'invention peut ainsi présenter plusieurs degrés de liberté.

La présente invention couvre également des applications du bras selon l'une quelconque des variantes exposées plus haut à un domaine technique appartenant au groupe comprenant :

- interface haptique avec un environnement virtuel ;
- interface haptique avec un environnement de réalité augmentée ;
- rééducation thérapeutique ;
- conception assistée par ordinateur;
- téléopération,
- entrainement sportif,
- formation aux gestes techniques.

**5. Liste des figures**

D'autres caractéristiques et avantages de l'invention apparaîtront à la lecture de la description suivante de modes de réalisation particuliers, donnés à titre de simples exemples illustratifs et non limitatifs, et des dessins annexés parmi lesquels :

- la figure 1 illustre une vue partielle en perceptive d'un bras articulé d'interface haptique selon l'art antérieur;
- la figure 2 illustre une vue en perspective d'un bras articulé d'interface haptique selon l'invention ;
- la figure 3 illustre le bras articulé de la figure 2 dont ont a ôté le capotage ;
- la figure 4 illustre une vue agrandie du mécanisme de transmission du bras articulé de la figure 3 ;
- la figure 5 illustre une vue partielle d'un exemple de réducteur à engrenages de la transmission auxiliaire d'un bras articulé selon l'invention en état inactif dans lequel un jeu existe entre les engrenages de sorte qu'ils ne sont pas en contact.

**6. Description de modes de réalisation particuliers**

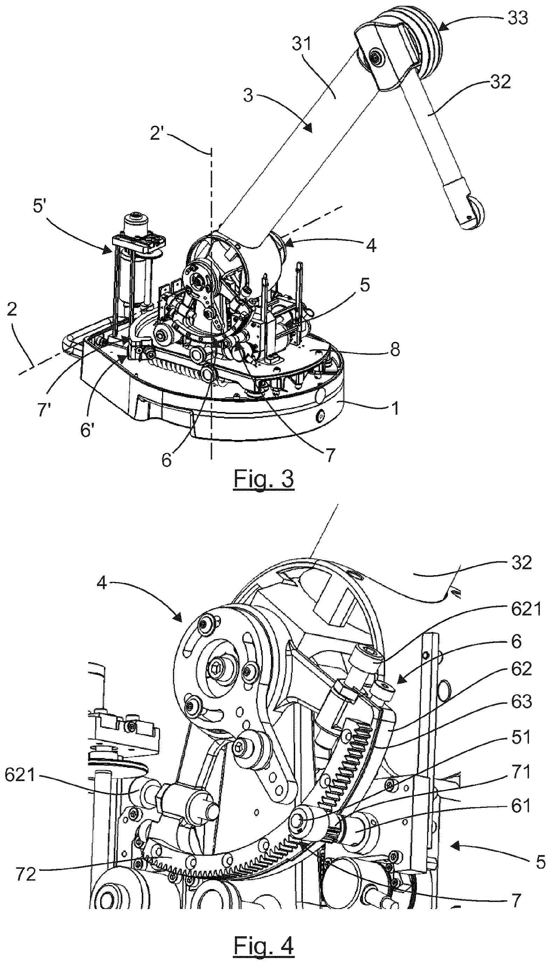

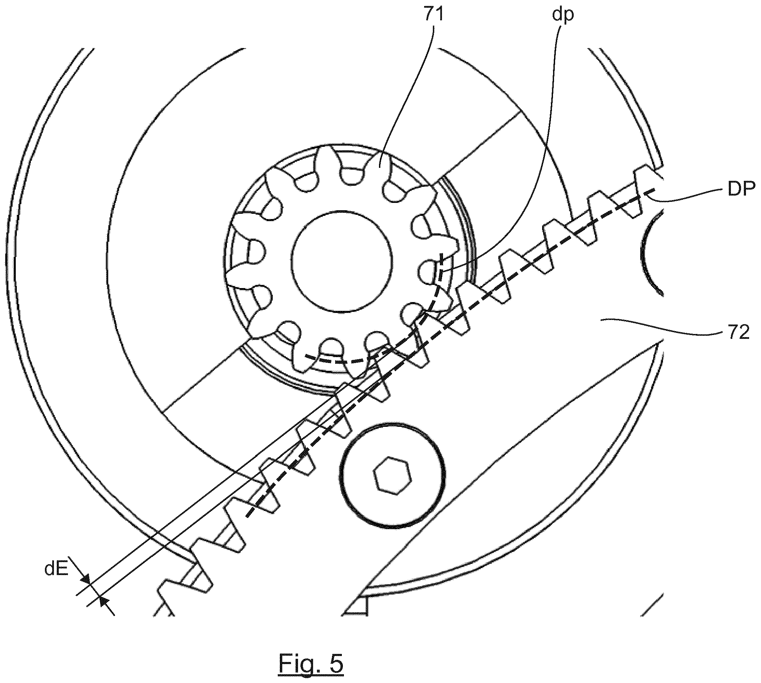

On présente, en relation avec les figures 2 à 5, un exemple d'un mode de réalisation d'un bras articulé motorisé d'interface haptique selon l'invention.

Ainsi que cela est représenté sur ces figures, un tel bras articulé motorisé comprend un bâti 1 et un bras 3 solidarisé au bâti 1 de manière mobile en rotation autour d'un axe 2 au moyen d'une articulation 4. Le mécanisme de transmission du bras articulé est recouvert d'un capotage 10.

Le bras 3 est destiné à être mis en mouvement autour de l'axe 2 pour accompagner ou contraindre le mouvement du milieu extérieur, comme par exemple un opérateur, manipulant son extrémité pour réaliser une tâche quelconque comme par exemple une opération chirurgicale, une manipulation d'objet, ...

Dans ce mode de réalisation, le bras 3 comprend deux portions de bras 31, 32 articulées entre-elles au moyen d'une articulation 33. Le bras 3 pourra bien évidemment prendre n'importe quelle forme adaptée à l'application visée. Il pourra par exemple comprendre une unique portion ou plus de deux portions articulées.

Le bras articulé comprend des moyens moteurs susceptibles d'être mis en oeuvre pour transmettre au bras 3 des couples autour de l'axe 2. Dans ce mode de réalisation, ces moyens moteur comprennent un moteur électrique 5. Les couples délivrés par le moteur pourront être tantôt moteurs tantôt résistants selon qu'il est souhaité d'accompagner ou de contraindre le mouvement du bras.

Le bras articulé comprend une transmission principale 6 au bras 3 d'un couple autour de l'axe 2 généré par le moteur 5 et s'opposant ou non au mouvement imprimé au bras par son environnement.

Dans ce mode de réalisation, la transmission principale 6 comprend un réducteur à câble, en particulier de type cabestan.

Ce réducteur à câble comprend classiquement une poulie 61 montée solidaire en rotation sur l'arbre de sortie 51 du moteur 5. Il comprend également une portion de poulie de plus grand diamètre 62, également appelée secteur, solidaire en rotation du bras 3 et dont l'axe de rotation est confondu avec l'axe 2. Dans une variante, le secteur 62 pourra être remplacé par une poulie. Le réducteur comprend encore un câble 63. Les extrémités libres du câble sont solidarisées de part et d'autre du secteur 62 au moyen de vis 621 prévues à cet effet. Le câble 63 s'étend le long du secteur 62, plus particulièrement du contour périphérique de celui-ci, en s'enroulant autour de la poulie 61.

Selon le principe de fonctionnement du réducteur à cabestan, la distance entre l'axe de la poulie 61 et l'axe du secteur 62 est supérieure à la somme du rayon de la poulie 61, du secteur 62 et du diamètre du câble 63. Un écart d'un millimètre environ est souvent constaté. Cela évite que le câble frotte simultanément sur la poulie et le secteur.

Le bras articulé comprend en outre une transmission auxiliaire 7 de couple autour de l'axe 2 généré par le moteur et s'opposant ou non au mouvement imprimé au bras 3 par son environnement.

Cette transmission auxiliaire comprend un pignon 71 monté solidaire en rotation sur l'arbre de sortie 51 du moteur 5 dans le prolongement de la poulie 61. Elle comprend également une portion de roue dentée 72 solidaire du secteur 62 et concentrique avec celui-ci. Ses dents forment saillie à la surface périphérique du secteur. Dans une variante, la portion de roue dentée pourra être remplacée par une roue dentée complète, en particulier lorsque le secteur sera remplacé par une poulie. La portion de roue dentée 72 est prévue pour engrener avec le pignon 71. Le pignon 71 et la roue dentée 72 constituent un réducteur à engrenages.

Le rapport de réduction du réducteur à câble de la transmission principale est égal à celui du réducteur à engrenages de la transmission auxiliaire. Pour cela, le diamètre primitif du pignon 71 est égal à la somme du diamètre de la poulie 61 et du diamètre du câble 63, et le diamètre primitif de la portion de roue dentée 72 est égal à la somme du diamètre du secteur 62 et du diamètre du câble 63.

La transmission auxiliaire 7 peut prendre au moins deux états :

- un état inactif, pris tant que les efforts appliqués par l'environnement sur le bras 3 contre l'effet du couple généré par le moteur 5 sont inférieurs à un seuil prédéterminé ; dans cet état la transmission auxiliaire ne transmet aucun couple au bras : elle est inactive ;
- un état actif, pris lorsque les efforts appliqués par l'environnement sur le bras 3 contre l'effet du couple généré par le moteur 5 sont supérieurs au seuil prédéterminé ; dans cet état la transmission principale ne transmet aucun couple au bras (elle est inactive), le couple étant transmis au bras seulement via la transmission auxiliaire.

Dans ce but, l'entraxe entre le pignon 71 et la portion de roue dentée 72 est légèrement augmenté par rapport à l'entraxe entre la poulie 61 et le secteur 62. Le diamètre primitif dp du pignon 71 n'est donc pas sécant ni tangent au diamètre primitif DP de la portion de roue dentée 72. Ces diamètres primitifs sont au contraire légèrement distants l'un de l'autre. Ainsi, dans l'état inactif, il existe un jeu entre les dents du pignon et les dents de la roue dentée.

Le réglage de cette différence d'entraxe pourra par exemple être obtenu en installant le moteur sur un support pouvant être déplacé sur une plage de réglage par rapport au bâti et maintenu en position après réglage.

Ainsi, tant que le niveau de charge appliqué par l'environnement du robot sur le bras contre l'effet du couple généré par le moteur est inférieur à une certaine valeur, le pignon 71 ne se trouve pas en contact avec la portion de roue 72. La transmission de couple au bras 3 se fait alors par la transmission principale 6 incluant le réducteur à cabestan et non par la transmission auxiliaire qui est alors en état inactif.

Si un effort important est exercé sur le bras par l'environnement, le câble 63 s'allonge sans rompre jusqu'à ce que les dents du pignon 71 et de la portion de roue dentée 72 entrent en contact. La tenue mécanique de l'articulation est alors assurée par le système à engrenages de la transmission auxiliaire. Le couple est alors transmis au bras par la transmission auxiliaire à réducteur à engrenages qui est en état actif et non plus par la transmission principale à réducteur à câble qui est inactive.

Le jeu entre les dents du réducteur à engrenages dans l'état inactif et la raideur du câble déterminent l'effort limite pour passer du fonctionnement en mode réducteur à câble au fonctionnement en mode réducteur à engrenages.

Ce jeu sera préférentiellement compris entre 0,1 et 0,5 fois la hauteur des dents des engrenages. Il sera bien évidemment déterminé de manière telle que le câble ne rompe pas avant et pendant les phases où la transmission auxiliaire devient active. L'allongement du câble induisant le passage de la transmission auxiliaire de son état inactif à son état actif se fera préférentiellement dans le domaine de déformation élastique.

Ce jeu entre les diamètres primitifs du pignon et de la roue, qui est égal à la différence dE entre l'entraxe entre l'axe de rotation du pignon 71 et l'axe de rotation de la potion de roue dentée 72 et l'entraxe entre l'axe de rotation de la poulie 61 et l'axe de rotation du secteur 62 peut par exemple être déterminé de la manière suivante :

$$dE = C_{max} / (K.\sin(alpha).F)$$

avec alpha : angle de pression de l'engrenage
K : raideur du câble
F : facteur de sécurité
Cmax : charge maximale sur le câble

L'invention permet donc de disposer de la transparence et de la fluidité du réducteur à câble tant que les efforts sur le bras restent faibles, et de la forte tenue mécanique du réducteur à engrenages lorsque la charge sur le bras devient plus forte.

Ainsi, grâce à l'invention, il est possible de choisir un câble de petite dimension, et ainsi d'améliorer la compacité de l'articulation tout en garantissant sa tenue mécanique.

En outre, si malgré la mise en oeuvre de l'invention, le câble arrive à la longue à rompre par fatigue mécanique, la transmission sera toujours assurée par la transmission auxiliaire. Compte tenu du jeu et des frottements dans la transmission auxiliaire, le fonctionnement du bras sera moins précis. Toutefois, le bras fonctionnera alors dans un mode dégradé qui permettra de garantir que l'utilisateur ne sera pas autorisé à intervenir dans une zone à risque.

On rappelle que l'invention s'applique à un dispositif de mise en mobilité d'une interface haptique.

A titre indicatif, un tel dispositif de mise en mobilité d'une interface haptique peut être mis en oeuvre pour la rééducation du bras d'un patient ou encore pour la comanipulation lors d'une opération chirurgicale.

Bien évidemment, les déclinaisons possibles et envisageables des modes de réalisation du dispositif selon l'invention sont nombreuses.

Dans d'autres modes de réalisation particuliers, il peut être envisagé, sans sortir du cadre de l'invention, de mettre en oeuvre un tel dispositif pour fournir une interface haptique simple destinée par exemple aux applications de téléopération, de jeux vidéo, de réalité virtuelle, de conception assistée par ordinateur, d'entrainement sportif, ou de formation au geste technique. Selon une autre application envisageable, il peut être prévu d'intégrer un dispositif de mise en mouvement à un changeur d'outil pour lequel l'objet à animer ou à manipuler est une pince articulée. Selon encore une autre application envisageable, un organe de manoeuvre, tel qu'un robot manipulateur, incorpore avantageusement un dispositif selon l'invention.

Dans des variantes, un ou plusieurs réducteurs intermédiaires pourront être mis en oeuvre entre la sortie du moteur et l'arbre sur lequel est montée la poulie moteur.

Pour des raisons d'équilibre mécanique, un couple transmission principale/transmission auxiliaire pourra être mis en oeuvre de part et d'autre de l'articulation reliant le bras au bâti.

Dans le mode de réalisation décrit plus haut, le bras est mobile en rotation par rapport au bâti selon un unique axe. Dans des variantes, il pourrait être mobile en rotation par rapport au bâti selon plusieurs axes. Dans ce cas, le bras articulé motorisé comprendra autant d'ensembles, ou de couples d'ensembles, de moyens moteurs, de transmission principale et de transmission auxiliaire que d'axes autour desquels le bras peut tourner, chaque ensemble de moyens moteurs, transmission principale et transmission auxiliaire étant dédié à la transmission de couple selon un desdits axes.

Le bras pourra par exemple être mobile en rotation par rapport au bâti selon un premier axe 2 et selon un deuxième axe 2' orthogonal au premier, un premier ensemble, ou couple d'ensembles, de moyens moteurs 5, de transmission principale 6 et de transmission auxiliaire 7 étant dédié à la transmission de couple selon le premier axe 2 et un deuxième ensemble, ou couple d'ensembles, de moyens moteurs 5', de transmission principale 6' et de transmission auxiliaire 7' étant dédié à la transmission de couple selon le deuxième axe 2'.

Par exemple, si le bras 3 est mobile en rotation autour de deux axes différents 2 et 2', l'ensemble constitué par le bras 3 mobile selon un premier axe 2, les transmissions principale 6 et auxiliaire 7 et le moteur 5 pourra être monté sur une platine 8 mobile en rotation par rapport au bâti 2 selon un autre axe 2'. Le bras motorisé pourra alors comprendre un autre moteur 5' ainsi qu'une autre transmission principale 6' et une autre transmission auxiliaire 7' pour entrainer la platine 8 en rotation selon cet autre axe 2' selon le même principe que celui selon lequel le couple du moteur 5 est transmis au bras 3 selon le premier axe 2.

Le bras 3 pourra bien entendu être mobile en rotation par rapport au bâti 2 selon plus de deux axes.

**Revendications**

1. Bras articulé motorisé d'interface haptique comprenant au moins :

   - un bâti (1) ;
   - un bras (3) lié audit bâti (1) de manière mobile en rotation autour d'au moins un axe (2), des efforts étant susceptibles d'être appliqués sur ledit bras (3) par son environnement ;
   - des moyens moteurs conçus pour délivrer au moins un couple autour dudit axe (2) s'opposant au moins en partie auxdits efforts appliqués audit bras (3) par son environnement ;
   - une transmission principale (6) audit bras (3) dudit couple autour dudit axe (2), ladite transmission principale (6) comprenant un réducteur à câble (63) de type cabestan ;
   - une transmission auxiliaire (7) audit bras (3) dudit couple autour dudit axe (2),

   le bras articulé étant **caractérisé en ce que** ladite transmission auxiliaire (7) peut prendre au moins deux états :

   - un état inactif, pris tant que lesdits efforts appliqués sur ledit bras (3) par son environnement contre l'effet dudit couple sont inférieurs à un seuil prédéterminé, dans lequel ladite transmission auxiliaire (7) ne transmet aucun couple audit bras (3) ;
   - un état actif, pris lorsque lesdits efforts appliqués sur ledit bras (3) par son environnement contre l'effet dudit couple sont supérieurs à un seuil prédéterminé, dans lequel ladite transmission principale (6) ne transmet aucun couple audit bras (3).

2. Bras articulé selon la revendication 1 dans lequel ladite transmission auxiliaire (7) est configurée pour prendre ledit état actif lorsque les efforts appliqués par l'environnement sur ledit bras (3) contre l'effet dudit couple induisent une déformation dudit câble (63) supérieure à un seuil prédéterminé.

3. Bras articulé selon la revendication 1 ou 2, dans lequel ladite transmission auxiliaire (7) comprend un réducteur à engrenages (71, 72).

4. Bras articulé selon la revendication 3, dans lequel ladite transmission principale (6) comprend :

- un élément d'entrainement (62) lié en rotation audit bras (3), ledit élément d'entrainement (62) comprenant au moins un secteur angulaire dont l'axe est confondu avec l'axe de rotation (2) dudit bras (3) ;
- une poulie d'entrainement (61) liée auxdits moyens moteur (5) ;

ledit câble (63) dudit réducteur à câble s'étendant le long dudit secteur angulaire (62) en s'enroulant autour de ladite poulie (61), les extrémités dudit câble (63) étant fixées audit élément d'entrainement (62).

5.  Bras articulé selon la revendication 4, dans lequel ladite transmission auxiliaire (7) comprend :

    - un pignon (71) lié auxdits moyens moteurs (5) et monté dans l'axe de ladite poulie (61),
    - au moins une portion de roue dentée (72) solidaire dudit élément d'entrainement (62) et engrenant avec ledit pignon (71) ;

    le rapport de réduction de ladite transmission auxiliaire (7) étant identique à celui de ladite transmission principale (6), l'entraxe entre l'axe de rotation dudit pignon (71) et l'axe de rotation de ladite roue dentée (72) étant supérieur à l'entraxe entre l'axe de rotation de ladite poulie (61) et l'axe de rotation dudit élément d'entrainement (62) de telle sorte que ledit pignon (71) et ladite roue (72) sont en contact et engrènent l'un avec l'autre seulement lorsque ladite transmission auxiliaire (7) est dans ledit état actif.

6.  Bras articulé selon la revendication 5, dans lequel la différence entre lesdits entraxes est comprise entre 0,1 et 0,5 fois la hauteur des dents dudit pignon (71) et de ladite roue (72).

7.  Bras selon la revendication 5 ou 6 dans lequel la différence dE entre lesdits entraxes est déterminée selon la formule suivante :

    $$dE = Cmax / (K. \sin(alpha).F)$$

    avec alpha : angle de pression de l'engrenage
    K : raideur du câble
    F : facteur de sécurité
    Cmax : charge maximale sur le câble

8.  Bras articulé selon l'une quelconque des revendications 1 à 7 dans lequel ledit bras (3) est monté mobile en rotation par rapport audit bâti (1) selon une pluralité d'axes, ledit bras articulé comprenant autant d'ensembles de moyens moteur (5), de transmission principale (6) et de transmission auxiliaire (7) que d'axes autour desquels ledit bras (3) peut tourner, chaque ensemble de moyens moteur, transmission principale et transmission auxiliaire étant dédié à la transmission de couple selon un desdits axes.

9.  Application du bras selon l'une quelconque des revendications 1 à 8 à un domaine technique appartenant au groupe comprenant :

    - interface haptique avec un environnement virtuel ;
    - interface haptique avec un environnement de réalité augmentée ;
    - rééducation thérapeutique ;
    - conception assistée par ordinateur ;
    - téléopération,
    - entrainement sportif,
    - formation aux gestes techniques.

**Patentansprüche**

1.  Motorisierter Gelenkarm mit haptischer Schnittstelle, der wenigstens aufweist:

    - ein Gestell (1);
    - einen Arm (3), der drehbewegbar um wenigstens eine Achse (2) mit dem Gestell (1) verbunden ist, wobei Kräfte von seiner Umgebung auf den Arm (3) aufgebracht werden können;
    - Motormittel (5), die dazu eingerichtet sind, wenigstens ein Drehmoment um die Achse (2) bereitzustellen, das sich wenigstens teilweise gegen die von seiner Umgebung auf den Arm (3) aufgebrachten Kräfte richtet;
    - ein Hauptgetriebe (6) zum Übertragen des Drehmoments um die Achse (2) auf den Arm (3), wobei das Hauptgetriebe (6) eine Winden-Kabeluntersetzung (63) aufweist;
    - ein Hilfsgetriebe (7) zum Übertragen des Drehmoments um die Achse (2) auf den Arm (3),

    wobei der Gelenkarm **dadurch gekennzeichnet ist, dass** das Hilfsgetriebe (7) wenigstens zwei Zustände einnehmen kann:

    - einen inaktiven Zustand, der solange eingenommen wird, wie die von seiner Umgebung auf den Arm (3) aufgebrachten Kräfte gegen die Wirking des Drehmoments niedriger als ein vordefinierter Schwellwert sind, in welchem das Hilfsgetriebe (7) kein Drehmoment auf den Arm (3) überträgt;
    - einen aktiven Zustand, der dann eingenommen wird, wenn die von seiner Umgebung auf den Arm (3) aufgebrachten Kräfte gegen die Wirkung des Drehmoments größer als ein vordefinierter Schwellwert sind, in welchem das Hauptgetriebe (6) kein Drehmoment auf den Arm (3) überträgt.

2. Gelenkarm nach Anspruch 1, in welchem das Hilfsgetriebe (7) konfiguriert ist, den aktiven Zustand dann einzunehmen, wenn die von der Umgebung auf den Arm (3) gegen die Wirkung des Widerstandsdrehmoments aufgebrachten Kräfte eine Deformation des Kabels induzieren, die einen vorbestimmten Schwellwert übersteigt.

3. Gelenkarm nach Anspruch 1 oder 2, in welchem das Hilfsgetriebe (7) eine Verzahnungsuntersetzung (71, 72) aufweist.

4. Gelenkarm nach Anspruch 3, in welchem das Hauptgetriebe (6) aufweist:

   - ein Antriebselement (62), das drehbar mit dem Arm (3) verbunden ist, wobei das Antriebselement wenigstens einen Winkelsektor aufweist, dessen Achse mit der Rotationsachse (2) des Arms (3) koinzidiert;
   - eine Antriebsscheibe (61), die mit den Motormitteln (5) verbunden ist;

   wobei sich das Kabel (63) der Kabeluntersetzung entlang des Winkelsektors (62) gerollt um die Scheibe (61) erstreckt, wobei die Enden des Kabels (63) an dem Antriebselement (62) fixiert sind.

5. Gelenkarm nach Anspruch 4, in welchem das Hilfsgetriebe (7) aufweist:

   - ein Ritzel (71), das mit den Motormitteln verbunden ist und in der Achse der Scheibe (61) montiert ist,
   - wenigstens einen Teil eines Zahnrades (72), der mit dem Antriebselement (62) verbunden ist und in das Ritzel (71) eingreift;

   wobei das Untersetzungsverhältnis des Hilfsgetriebes (7) identisch mit dem des Hauptgetriebes (6) ist, wobei der Achsabstand zwischen der Rotationsachse des Ritzels (71) und der Rotationsachse des Zahnrades (72) größer als der Achsabstand zwischen der Rotationsachse der Scheibe (61) und der Rotationsachse des Antriebselementes (62) derart ist, dass das Ritzel (71) und das Rad (72) nur dann in Kontakt sind und ineinander eingreifen, wenn sich das Hilfsgetriebe (7) in dem aktiven Zustand befindet.

6. Gelenkarm nach Anspruch 5, in welchem der Unterschied zwischen den Achsabständen innerhalb eines Bereiches von 0,1 bis 0,5 mal der Höhe der Zähne des Ritzels (71) und des Zahnrades (72) enthalten ist.

7. Arm nach einem der Ansprüche 5 oder 6, in welchem der Unterschied dE zwischen den Achsabständen gemäß der folgenden Formel bestimmt wird:

$$dE = Cmax / (K.\sin(alpha).F)$$

   mit alpha: Winkel des Druckes der Verzahnung
   K: Steifigkeit des Kabels
   F: Sicherheitsfaktor
   Cmax: maximale Last auf dem Kabel

8. Gelenkarm nach einem der Ansprüche 1 bis 7, in welchem der Arm (3) drehbewegbar bezüglich des Gestells (1) gemäß einer Vielzahl von Achsen montiert ist, wobei der Gelenkarm ebenso viele Sätze von Motormitteln (5), von Hauptgetrieben (6) und von Hilfsgetrieben (7), wie es Achsen gibt, um die sich der Arm (3) drehen kann, aufweist, wobei jeder Satz von Motormitteln, Hauptgetrieben und Hilfsgetrieben der Übertragung des Drehmoments gemäß einer der Achsen gewidmet ist.

9. Anwendung des Arms nach einem der Ansprüche 1 bis 8 in einem technischen Gebiet, das zur Gruppe gehört, umfassend:

   - haptische Schnittstelle mit einer virtuellen Umgebung;
   - haptische Schnittstelle mit einer Umgebung der erweiterten Realität;
   - therapeutische Rehabilitation;
   - computergestütztes Design;
   - Telebetrieb;
   - Sporttraining;
   - Trainieren technischer Gesten.

## Claims

1. Motor-driven articulated haptic interface arm comprising at least:

   - a frame (1);
   - an arm (3) linked to said frame (1) so as to be rotationally mobile about at least one axis (2), forces being liable to be applied to said arm (3) by its environment;
   - motor means designed to deliver at least one torque about said axis (2) countering at least one part of said forces applied to said arm (3) by its environment;
   - a main transmission (6) for the transmission to said arm (3) of said torque about said axis (2), said main transmission (6) comprising a capstan-type cable reducer (63);
   - an auxiliary transmission (7) for the transmission to said arm (3) of said torque about said axis (2),

said articulated arm being **characterized in that** said auxiliary transmission (7) is capable of taking at least two states:

- an inactive state, taken so long as the forces applied to said arm (3) by its environment against the effect of said torque are below a predetermined threshold, in which said auxiliary transmission (7) transmits no torque to said arm (3);
- an active state, taken when said forces applied to said arm (3) by its environment against the effect of said torque are higher than a predetermined threshold, in which said main transmission (6) transmits no torque to said arm (3).

2. Articulated arm according to claim 1 wherein said auxiliary transmission (7) is configured to take said active state when the forces applied by the environment to said arm (3) against the effect of said torque induce a deformation of said cable (63) that is above a predetermined threshold.

3. Articulated arm according to claim 1 or 2, wherein said auxiliary transmission (7) comprises a gear reducer (71, 72).

4. Articulated arm according to claim 3, wherein said main transmission (6) comprises:

- a drive element (62) rotationally linked to said arm (3), said drive element (62) comprising at least one angular sector, the axis of which coincides with the axis of rotation (2) of said arm (3);
- a drive pulley (61) linked to said motor means (5);

said cable (63) of said cable reducer extending along said angular sector (62) in getting wound about said pulley (61), the extremities of said cable (63) being fixed to said drive element (62).

5. Articulated arm according to claim 4, wherein said auxiliary transmission (7) comprises:

- a pinion (71) linked to said motor means (5) and mounted in the axis of the said pulley (61),
- at least one toothed-wheel portion (72) fixedly attached to said drive element (62) and meshing with said pinion (71);

the reduction ratio of said auxiliary transmission (7) being identical to that of said main transmission (6), the center distance between the axis of rotation of said pinion (71) and the axis of rotation of said toothed wheel (72) being greater than the center distance between the axis of rotation of said pulley (61) and the axis of rotation of said drive element (62) in such a way that said pinion (71) and said wheel (72) are in contact and mesh with each other only when said auxiliary transmission (7) is in said active state.

6. Articulated arm according to claim 5, wherein the difference between said center distances ranges from 0.1 to 0.5 times the height of the teeth of said pinion (71) and of said wheel (72).

7. Arm according to claim 5 or 6 wherein the difference dE between said center distance is determined according to the following formula:

$$dE = Cmax / (K. sin(alpha).F)$$

with alpha: angle of pressure of the gearing
K: stiffness of cable
F: factor of security
Cmax: maximum load on the cable

8. Articulated arm according to any one of the claims 1 to 7 wherein said arm (3) is mounted so as to be rotationally mobile relative to said frame (1) along a plurality of axes, said articulated arm comprising as many sets of motor means (5), main transmission means (6) and auxiliary transmission means (7) as there are axes around which said arm (3) can rotate, each set of motor means, main transmission means and auxiliary transmission means being dedicated to the transmission of torque along one of said axes.

9. Applications of the arm according to any one of the claims 1 to 8 to a technical field belonging to the group comprising:

- haptic interfacing with a virtual environment;
- haptic interfacing with an augmented reality environment;
- therapeutic re-education;
- computer-assisted design;
- teleoperation;
- sports training;
- training in technical gestures.

Fig. 1

Fig. 2

Fig. 3

Fig. 4

EP 3 109 011 B1

Fig. 5

EP 3 109 011 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5046375 A
- US 20110003656 A1